# EUROPÄISCHE PATENTSCHRIFT

(11) **EP 2 193 107 B1**
(45) Veröffentlichungstag und Bekanntmachung des Hinweises auf die Patenterteilung: **11.09.2019**
(21) Anmeldenummer: 08804143.9
(22) Anmeldetag: 12.09.2008
(51) Int. Cl.: C04B 26/16, E01C 7/30

(54) **VERFAHREN ZUR HERSTELLUNG MINERALHALTIGER DECKSCHICHTEN FÜR BODENBELÄGE**
METHOD FOR PRODUCING MINERAL-BEARING COVER LAYERS FOR FLOOR COVERINGS
PROCÉDÉ DE FABRICATION DE COUCHES DE COUVERTURE POUR REVÊTEMENTS DE SOL

(30) Priorität: 14.09.2007 EP 07116500
(43) Veröffentlichungstag der Anmeldung: 09.06.2010
(73) Patentinhaber: BASF SE, 67056 Ludwigshafen am Rhein (DE)
(72) Erfinder: MOHMEYER, Nils, 49076 Osnabrück (DE); REESE, Oliver, 49448 Lemförde (DE); EISENHARDT, Andrea, 49377 Vechta (DE); LEBERFINGER, Marcus, 49124 Georgsmarienhütte (DE); MOHMEYER, Heinrich, 31061 Alfeld / Leine (DE)
(74) Vertreter: BASF IP Association
(86) Internationale Anmeldenummer: PCT/EP2008/062180
(87) Internationale Veröffentlichungsnummer: WO 2009/037205

(56) Entgegenhaltungen:
- EP-A2- 1 541 605
- WO-A-2005/075741
- WO-A-2007/104710
- AT-B- 205 534
- DE-A1- 19 651 749
- DE-A1- 19 733 588
- DE-A1- 19 833 819

## Beschreibung

Die vorliegende Erfindung betrifft ein Verfahren zur Herstellung von Deckschichten für Straßen, Wege und andere Verkehrsflächen, bei dem man eine Mischung, enthaltend mineralisches Material und eine Polyurethanreaktionsmischung sowie gegebenenfalls weitere Additive, herstellt, auf ein Untergrundmaterial aufbringt, mit einem Anpressdruck von mindestens 5 N/cm² verdichtet und aushärtet, wobei im wesentlichen ohne Einsatz von Lösemitteln gearbeitet wird, das Untergrundmaterial eine Trag- oder Binderschicht oder eine Mischung, enthaltend die Polyurethanmischung und mineralischem Material, ist und die Polyurethanreaktionsmischung erhältlich ist durch Vermischen von (a) Isocyanaten mit (b) Verbindungen mit mindestens zwei gegenüber Isocyanat reaktiven Wasserstoffatomen, die eine hydroxyfunktionelle Verbindung mit hydrophoben Gruppen enthalten, sowie gegebenenfalls (c) Kettenverlängerungsmitteln und/oder Vernetzungsmitteln, (d) Katalysatoren und (e) sonstiger Zusatzstoffe.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Deckschichten für Straßen werden fast ausschließlich aus Asphalt hergestellt. Dazu wird ein Mineralgemisch mit Bitumen als Bindemittel auf den Untergrund aufgebracht und verdichtet. Solche Deckschichten haben aber den Nachteil, dass diese insbesondere bei hohen Temperaturen in Verbindung mit großer Belastung Festigkeit verlieren, da Bitumen mit zunehmender Temperatur kontinuierlich weicher wird. Dabei kann es zur Bildung von Spurrillen oder sogenannten Waschbrettstrukturen, welche durch Bremsen, Stehen und Anfahren, insbesondere vor Ampeln entstehen, kommen. Darüber hinaus werden Deckschichten auf Basis von Bitumen mit der Zeit spröde, da aus dem Bitumen über lange Zeiträume Bestandteile ausdünstet.

Ein weiterer Nachteil von auf Bitumen als Bindemittel basierten Deckschichten ist, dass die Mischungen aus mineralischem Material und Bitumen nur bei Temperaturen von mindestens 180 °C hergestellt werden können, da bei dieser Temperatur die Viskosität gering genug ist, um eine ausreichende Benetzung der Gesteinspartikel zu gewährleisten. So werden zur Erhitzung von dem Mineralgemisch pro Tonne ca. 10 Liter Heizöl benötigt. Dazu kommt, dass die Herstellung des Gemisches nicht vor Ort erfolgt, was zu einem verstärkten LKW-Verkehr von der Asphaltmischanlage zur Einbaustelle führt. Neben steigenden Kosten für Diesel und Heizöl ist dabei auch die Umweltbelastung, insbesondere die durch den Verbrauch von Diesel und Heizöl verursachte CO₂-Emission nachteilig. Darüber hinaus müssen gebrauchte Deckschichten auf Basis von Bitumen als Sondermüll entsorgt werden bzw. können nach dem Zerkleinern nur in geringem Maße neuen Asphalten zugesetzt werden.

Neben Deckschichten mit Bitumen als Bindemittel sind auch Bodenbeläge auf Basis von Kunststoffen als Bindemittel bekannt. So offenbart DE 196 05 990 ein Verfahren zur Herstellung eines Bodenbelags, erhältlich durch Vermischen einer polymerisierbaren Flüssigkeit und Naturstein. Als polymerisierbare Flüssigkeit wird beispielsweise auch ein Einkomponentensystem auf Basis von Polyurethan genannt.

DE 196 51 749 offenbart die Herstellung von Tragschichten als Fahrbahnbelag im Straßen- und Wegebau durch Vermengen von Gesteinsmaterial mit einem Thermoplastklebstoff. Neben der Verwendung von Thermoplastklebstoff wird auch die Verwendung von Duroplastklebstoff oder Monoplastklebstoff erwähnt. DE 196 51 749 stellt dabei heraus, dass sich Thermoplastikkleber während der Abkühlphase gut verdichten lassen. Als Vorteil von Duroplastkleber, der beispielsweise ein Mehrkomponentenharzkleber auf Basis von Polyurethan sein kann, wird die hohe Tragfähigkeit genannt. Ein Verdichten von Gesteinsmaterial und Duroplastkleber wird nicht offenbart.

DE 197 33 588 offenbart die Herstellung von wasserdurchlässigen Bodenbelägen aus mineralischen Zuschlagstoffen und organischem Kleber, beispielsweise einem zweikomponentigen Epoxid- oder Polyurethankleber. Dabei werden Mischungen aus einem Mineralstoff mit einer mittleren Korngröße von vorzugsweise zwischen 1 und 5 mm und dem Kleber vermischt, aufgetragen und mit einem Anpressdruck von 1 bis 2 N/cm² verdichtet. Solche Beläge eignen sich für Radwege, verkehrsberuhigte Zonen, Gehwege, Parkplätze, Sport- und Reitanlagen, Hofeinfahrten und Gartenwege.

Nachteile der bekannten Deckschichten mit Bindemitteln auf Basis polymerisierbarer Flüssigkeiten ist die geringe Tragfähigkeit. Weitere Nachteile sind, dass bekannte Deckschichten frostempfindlich sind und dass das polymere Bindemittel wenig alterungsbeständig ist.

Aufgabe der vorliegenden Erfindung war es daher, ein Verfahren zur Herstellung einer Deckschicht zur Verfügung zu stellen, die umweltverträglich hergestellt und eingebaut werden kann, eine hohe Tragfähigkeit, auch bei hohen Temperaturen, aufweist, unempfindlich gegenüber Alterung des Bindemittels und gegenüber Frost/Tau-Zyklen ist.

Diese Aufgabe wurde durch das Verfahren gemäß Anspruch 1 gelöst.

Als mineralisches Material kann dabei jedes bekannte mineralische Material eingesetzt werden. Dabei kann beispielsweise Sand oder gemahlenes Gestein, so genanntes gebrochenes Material, eingesetzt werden, wobei Sand über eine überwiegend runde Oberfläche verfügt und gebrochenes Material Kanten und Bruchflächen aufweist. Besonders bevorzugt wird als mineralisches Material ein Material eingesetzt, das zu einem überwiegenden Teil aus gebrochenem Material besteht. Vorzugsweise werden als mineralisches Material Mineralstoffe mit geeigneter Korngrößenverteilung in Anlehnung an die Vorschriften im bituminösen Straßenbau und in Abhängigkeit des Verwendungszwecks ausgewählt.

Vorzugsweise beträgt die mittlere Korngröße des mineralischen Materials 0,1 bis 30 mm, besonders bevorzugt 1 bis 20 mm und insbesondere 2 bis 15 mm. Dabei wird die mittlere Korngröße durch Sieben ermittelt und gibt die Maschenweite an, bei der 50 Gew.-%, des mineralischen Materials Korngrößen aufweisen, die kleiner als die Maschenweite sind und 50 Gew.-% des mineralischen Materials Korngrößen aufweisen, die größer als die Maschenweite sind. Der Gewichtsanteil von mineralischem Material mit Korngrößen kleiner 0,09 mm ist dabei bevorzugt kleiner 15 Gew.-% und der Gewichtsanteil von mineralischem Material mit Korngrößen größer 16 mm bevorzugt kleiner gleich 10 Gew.-%. Besonders bevorzugt ist der Anteil von mineralischem Material mit Korngrößen größer 11,2 mm kleiner gleich 10 Gew.-%. Die Angaben beziehen sich dabei jeweils auf das Gesamtgewicht des mineralischen Materials.

Unter einer Polyurethanreaktionsmischung wird eine Mischung aus Verbindungen mit Isocyanatgruppen und Verbindungen mit gegenüber Isocyanaten reaktiven Gruppen verstanden, wobei der Reaktionsumsatz, bezogen auf die zur Herstellung der Polyurethanreaktionsmischung eingesetzten Isocyanatgruppen vorzugsweise kleiner 90 %, besonders bevorzugt kleiner 75 % und insbesondere kleiner 50 % ist. Dabei umfassen die Verbindungen mit gegenüber Isocyanaten reaktiven Gruppen sowohl hochmolekulare Verbindungen, wie Polyether- und Polyesterole als auch niedermolekulare Verbindungen, wie beispielsweise Glycerin, Glycol und auch Wasser. Ist der Reaktionsumsatz, bezogen auf die Isocyanatgruppe, größer als 90 %, wird im Folgenden von einem Polyurethan gesprochen. Dabei kann eine Polyurethanreaktionsmischung auch weitere Reaktionsmischungen zur Herstellung von Polymeren enthalten. Als weitere Reaktionsmischungen zur Herstellung von Polymeren können beispielsweise Reaktionsmischungen zur Herstellung von Epoxiden, Acrylaten oder Polyesterharzen eingesetzt werden. Der Anteil an weiteren Reaktionsmischungen zur Herstellung von Polymeren beträgt dabei vorzugsweise weniger als 50 Gew.-%, bezogen auf das Gesamtgewicht der Polyurethanreaktionsmischung. Besonders bevorzugt enthält die Polyurethanreaktionsmischung keine weiteren Reaktionsmischungen zur Herstellung von Polymeren.

Bei der Polyurethanreaktionsmischung kann es sich um sogenannte feuchtigkeitshärtende Systeme handeln. Diese umfassen Isocyanatprepolymere, welche durch Zugabe von Wasser bzw. durch Luftfeuchtigkeit unter Bildung von in erster Linie Harnstoffgruppen Polyurethane bzw. Polyharnstoffe bilden.

Vorzugsweise werden zur Herstellung der Polyurethanreaktionsmischung sogenannte Zweikomponenten-Systeme eingesetzt. Dazu wird eine Isocyanatkomponente, enthaltend Verbindungen Isocyanatgruppen, und eine Polyolkomponente, enthaltend Verbindungen mit gegenüber Isocyanaten reaktiven Gruppen in solchen Mengenverhältnissen vermischt, dass der Isocyanatindex im Bereich von 40 bis 300, vorzugsweise 60 bis 200 und besonders bevorzugt 80 bis 150 ist.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Polyurethanreaktionsmischung wird erhalten durch Vermischen von a) Isocyanaten mit b) höhermolekularen Verbindungen mit mindestens zwei gegenüber Isocyanat reaktiven Wasserstoffatomen, die eine hydroxyfunktionelle Verbindung mit hydrophoben Gruppen enthaltenen, sowie gegebenenfalls c) Kettenverlängerungsmitteln und/oder Vernetzungsmitteln, d) Katalysatoren und e) sonstiger Zusatzstoffe. Besonders bevorzugt werden als Komponenten a) und b) sowie gegebenenfalls c) bis e) solche Verbindungen eingesetzt, die zu einer hydrophoben Polyurethanreaktionsmischung und zu einem hydrophoben Polyurethan führen.

Als Isocyanate a) können prinzipiell alle bei Raumtemperatur flüssigen Isocyanate, Mischungen und Prepolymere mit mindestens zwei Isocyanatgruppen eingesetzt werden. Vorzugsweise kommen aromatische Isocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Isocyanate können auch modifiziert sein, beispielsweise durch den Einbau von Isocyanuratgruppen und Carbodiimidgruppen und insbesondere durch den Einbau von Urethangruppen. Die letztgenannten Verbindungen werden durch Umsetzung von Isocyanaten mit einem Unterschuss an mit Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 32 Gew.-%. Vorzugsweise enthalten die Isocyanate a) Roh-MDI, wodurch die Stabilität des erhaltenen Polyurethans erhöht wird.

Nachteilig bei der Verwendung von aromatischen Isocyanaten ist die unzureichende Farbstabilität der daraus hergestellten Polyurethane. Zumeist kommt es mit der Zeit zu einer deutlichen Vergilbung der Polyurethane. Bei Anwendungen des erfindungsgemäßen Verfahrens, bei denen es auf eine hohe Farbstabilität ankommt, ist daher die Ver wendung von Mischungen, enthaltend aliphatische Isocyanate und aromatische Isocyanate, bevorzugt. Besonders bevorzugt werden ausschließlich aliphatische Isocyanate eingesetzt. In einer besonderen Ausführungsform kann eine Oberschicht aus Polyurethan auf Basis eines aliphatischen Isocyanates eingesetzt werden, um die Deckschicht auf Basis von aromatischem Isocyanat vor dem Vergilben zu schützen. Dabei kann die Oberschicht auch mineralisches Material enthalten. Bevorzugte Vertreter sind Hexamethylendiisocyanat (HDI) und Isophorondiisocyanat (IPDI). Auf Grund der hohen Flüchtigkeit der aliphatischen Isocyanate werden diese zumeist in Form ihrer Umsetzungsprodukte, insbesondere als Biurete, Allophanate oder Isocyanurate eingesetzt. Ebenso können die aliphatischen mit allen denkbaren und insbesondere unter b) aufgeführten Polyolen zu Prepolymeren umgesetzt und eingesetzt werden.

Als höhermolekulare Verbindungen mit mindestens zwei gegenüber Isocyanat reaktiven Wasserstoffatomen b) werden vorzugsweise Verbindungen eingesetzt, die als gegenüber Isocyanat reaktive Gruppe Hydroxylgruppen oder Aminogruppen aufweisen. Vorzugsweise werden mehrfunktionelle Alkohole eingesetzt, da die Aminogruppen sehr reaktiv sind und das Reaktionsgemisch daher rasch verarbeitet werden muss. Darüber hinaus führten Aminogruppen zur Bildung von Harnstoffgruppen, die wiederum zu einem überwiegend spröden Polyurethan aushärten.

Als höhermolekulare, mehrfunktionelle Alkohole können beispielsweise Polyether oder Polyester eingesetzt werden. Gemeinsam mit den genannten Verbindungen können weitere Verbindungen mit mindestens zwei gegenüber Isocyanatgruppen reaktiven Wasserstoffatomen eingesetzt werden. Auf Grund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mg KOH/g, vorzugsweise mindestens 600 mg KOH/g, insbesondere im Bereich von 600 bis 1000 mg KOH/g. Ihre Herstellung erfolgt auf üblichem Wege durch Umsetzung von mindestens dreifunktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Dabei enthalten die Reaktionsmischungen hydroxylfunktionalisierte Verbindungen mit hydrophoben Gruppen. Solche hydrophoben Gruppen haben Kohlenwasserstoffgruppen mit vorzugsweise mehr als 6, besonders bevorzugt mehr als 8 und weniger als 100 und insbesondere mehr als 10 und weniger als 50 Kohlenstoffatomen. Die Verbindungen mit hydrophoben Gruppen werden als Bestandteil der Komponente b) zur Herstellung der Reaktionsmischung eingesetzt werden. Vorzugsweise handelt es sich bei den hydroxylfunktionalisierten hydrophoben Verbindungen um Verbindungen, die der Definition der höhermolekularen Verbindungen mit mindestens zwei gegenüber Isocyanaten reaktiven Wasserstoffatomen b) entspricht. Dabei kann die Komponente b) hydroxylfunktionalisierte hydrophobe Verbindungen enthalten oder vorzugsweise daraus bestehen.

Als hydroxylfunktionalisierte hydrophobe Verbindung wird vorzugsweise eine hydroxylfunktionalisierte fettchemische Verbindung, ein fettchemisches Polyol, eingesetzt.

Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen® 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Henkel angeboten.

In einer besonders bevorzugten Ausführungsform des erfindungsgemäßen Verfahrens enthält die höhermolekularen Verbindungen mit mindestens zwei gegenüber Isocyanat reaktiven Wasserstoffatomen b) mindestens ein fettchemisches Polyol und mindestens ein mit Phenol modifiziertes aromatisches Kohlenwasserstoffharz, insbesondere ein Inden-Cumaron-Harz. Polyurethanreaktionsmischungen auf Basis dieser Komponente b) weisen eine derart hohe Hydrophobie auf, dass sie prinzipiell sogar unter Wasser aushärten können bzw. der Einbau bei Regen möglich ist.

Als mit Phenol modifizierte aromatisches Kohlenwasserstoffharz mit einer endständigen Phenolgruppe werden vorzugsweise mit Phenol modifizierte Inden-Cumaron-Harze, besonders bevorzugt technische Gemische von aromatischen Kohlenwasserstoffharzen verwendet. Derartige Produkte sind handelsüblich und werden beispielsweise von der Firma Rütgers VFT AG unter dem Handelsnamen NOVARES® angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchemische Polyol und das mit Phenol modifizierte aromatische Kohlenwasserstoffharz, insbesondere das Inden-Cumaron-Harz in einem Gewichtsverhältnis von 100 : 1 bis 100 : 50 eingesetzt.

Bei der Herstellung der Polyurethanreaktionsmischung kann ein Kettenverlängerungsmittel c) eingesetzt werden. Dabei kann auch jedoch auf das Kettenverlängerungsmittel c) verzichtet werden. Zur Modifizierung der mechanischen Eigenschaften, z. B. der Härte, kann sich allerdings der Zusatz von Kettenverlängerungsmitteln, Vernetzungsmitteln oder gegebenenfalls auch Gemischen davon als vorteilhaft erweisen.

Werden niedermolekulare Kettenverlängerungsmittel und/oder Vernetzungsmittel c) eingesetzt, können bei der Herstellung von Polyurethanen bekannten Kettenverlängerer eingesetzt werden. Dies sind vorzugsweise niedermolekulare Verbindungen mit gegenüber Isocyanaten reaktiven Gruppen mit einem Molekulargewicht von 62 bis 400 g/mol, beispielsweise Glycerin, Trimethylolpropan, bekannte Glycolderivate, Butandiol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Die eingesetzten Polyurethane können prinzipiell ohne die Anwesenheit von Katalysatoren d) hergestellt werden. Zur Verbesserung der Aushärtung können Katalysatoren d) mit verwendet werden. Als Katalysatoren d) sollten vorzugsweise solche ausgewählt werden, die eine möglichst lange Reaktionszeit bewirken. Dadurch ist es möglich, dass die Polyurethanreaktionsmischung lange flüssig bleibt. Solche Katalysatoren sind dem Fachmann bekannt. Prinzipiell ist es, wie beschrieben, möglich, auch ganz ohne Katalysator zu arbeiten.

Der Polyurethanreaktionsmischung können weitere übliche Bestandteile zugesetzt werden, beispielsweise übliche Zusatzstoffe e). Diese umfassen beispielsweise übliche Füllstoffe. Vorzugsweise werden als Füllstoffe die an sich bekannten, üblichen organischen und anorganischen Füllstoffe, Verstärkungsmittel und Beschwerungsmittel verwendet. Im einzelnen seien beispielhaft genannt: anorganische Füllstoffe, wie silikatische Mineralien, beispielsweise Schichtsilikate, wie Antigorit, Serpentin, Hornblenden, Amphibole, Chrisotil, Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid sowie Glas. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Werden oben genannte anorganische Füllstoffe als Zusatzstoffe e) eingesetzt, weisen diese vorzugsweise eine andere Mineralstoffzusammensetzung als das mineralischen Material auf und werden nicht bei der Bestimmung der Korngrößenverteilung des mineralischen Materials berücksichtigt.

Die anorganischen und organischen Füllstoffe können einzeln oder als Gemische verwendet werden und sind in der Reaktionsmischung vorzugsweise in Mengen von 0,5 bis 50 Gew.-%, besonders bevorzugt 1 bis 40 Gew.-%, bezogen auf das Gewicht der Komponenten a) bis e) enthalten.

Weiter sollte die Polyurethanreaktionsmischung Trockenmittel, beispielsweise Zeolithe, enthalten. Diese werden vorzugsweise vor der Herstellung der Reaktionsmischung der Verbindungen mit mindestens zwei gegenüber Isocyanat reaktiven Wasserstoffatomen b) beziehungsweise der Komponente, welche die Verbindungen mit mindestens zwei gegenüber Isocyanat reaktiven Wasserstoffatomen b) enthält, zugegeben. Durch die Zugabe der Trockenmittel wird die Anreicherung von Wasser in den Komponenten bzw. der Reaktionsmischung vermieden, wodurch die Bildung von geschäumtem Polyurethan vermieden wird. Als Additive zur Wasseradsorption werden vorzugsweise Aluminosilikate, ausgewählt aus der Gruppe der Natriumaluminasilikate, Kaliumaluminasilikate, Calciumaluminasilikate, Cäsiumaluminasilikate, Bariumaluminasilikate, Magnesiumaluminasilikate, Strontiumaluminasilikate, Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Zur Verbesserung der Langzeitstabilität der erfindungsgemäß hergestellten Deckschichten ist es weiterhin vorteilhaft, Mittel gegen den Angriff von Kleinlebewesen zuzusetzen. Außerdem ist der Zusatz von UV-Stabilisatoren vorteilhaft, um eine Versprödung der Formkörper zu vermeiden. Solche Zusatzstoffe sind bekannt und beispielsweise im "Kunststoffhandbuch, Band 7, Polyurethane", Carl Hanser Verlag, 3. Auflage 1993, Kapitel 3.4 angegeben.

Der Zusatz der Komponenten c), d) und e) erfolgt vorzugsweise zu den Verbindungen mit mindestens zwei mit Isocyanatgruppen reaktiven Wasserstoffatomen. Diese Abmischung wird in der Technik häufig als Polyolkomponente bezeichnet Die Kombination der Isocyanate mit den Verbindungen mit mindestens zwei mit Isocyanatgruppen reaktiven Wasserstoffatomen sollte in einem solchen Verhältnis erfolgen, dass vorzugsweise ein stöchiometrischer Überschuss an Isocyanatgruppen vorliegt In einer bevorzugten Ausführungsform der Erfindung werden Polyurethanreaktionsmischungen eingesetzt, die zu hydrophoben, im wesentlichen kompakten Polyurethanen führen. Als kompaktes Polyurethan wird ein Polyurethan bezeichnet, das im wesentlichen frei von Gaseinschlüssen ist. Vorzugsweise ist die Dichte eines kompakten Polyurethans größer 0,8 g/cm³, besonders bevorzugt größer 0,9 g/cm³ und insbesondere größer 1,0 g/cm³.

Neben Polyurethanreaktionsmischung und mineralischem Material kann die Mischung zur erfindungsgemäßen Herstellung von Deckschichten auch weitere Additive enthalten. Vorzugsweise enthalten die Additive Materialien, die das Ablaufen des Bindemittels von dem mineralischen Material verhindert. Als solche Additive können beispielsweise organische Fasern, wie Cellulosefasern, zugegeben werden. Des Weiteren können Polymere zugesetzt werden, die auch heute schon in den verwendeten bitumenbasierten Systemen eingesetzt werden. Vor allem sind dies Neoprene, StyrolButadien-Styrol, Blockcopolymere oder deren Mischungen sowie auch alle weiteren bekannten Gummis und deren Mischungen. Die Additive können sowohl direkt dem Mineralgemisch als Pulver oder Granulat zugesetzt als auch in eine der Polyurethankomponenten dispergiert werden.

Die Herstellung der Mischungen zur Herstellung von Deckschichten ist nicht beschränkt. So kann die Herstellung beispielsweise in Mischern erfolgen, in welche das mineralische Material eingebracht wird und die Ausgangskomponenten zur Herstellung der Polyurethanreaktionsmischung beispielsweise durch sprühen eingebracht werden. Gegebenenfalls zuzugebende Additive werden dabei vorzugsweise zum jeweils vorteilhaften Zeitpunkt zu der Mischung zugegeben. So können diese beispielsweise in einer der Komponenten der Reaktionsmischung, beispielsweise einer der Komponenten a) bis e), gelöst oder dispensiert vorliegen und zusammen mit diesen der Mischung zugegeben werden. Ebenso können die Additive auch gesondert der Mischung zugegeben werden. Beispielsweise können Cellulosefasern zu einem solchen Zeitpunkt zugegeben werden, dass diese in der Mischung zur Herstellung von Deckenschichten homogen verteilt vorliegen, aber nicht durch den Mischvorgang zerstört werden. Dabei kann die erfindungsgemäße Mischung zur Herstellung von Deckschichten beispielsweise gemäß dem in DE 196 32 638 beschriebenen Verfahren hergestellt werden. Weiter ist es beispielsweise ebenfalls möglich, zuerst die Polyurethanreaktionsmischung herzustellen und diese anschließend mit dem mineralischen Material und den gegebenenfalls weiteren Additiven zu vermischen. Gegebenenfalls kann in einer weiteren Ausführungsform das mineralische Material zuerst mit einigen Komponenten der Reaktionsmischung vermischt werden, beispielsweise mit den Komponenten b) und, falls vorhanden c) bis e), und anschließend die noch fehlenden Komponenten, beispielsweise die Komponente a) in einem Mischer zugegeben werden.

Die eingesetzten hydrophoben Polyurethanreaktionsmischungen zeichnen sich durch eine besonders gute Verarbeitbarkeit aus. So zeigen diese Polyurethanreaktionsmischungen und die daraus erhaltenen Polyurethane eine besonders gute Haftung, insbesondere auch auf feuchten Substraten wie nassem mineralischem Material. Die Aushärtung der Polyurethanreaktionsmischung erfolgt trotz der Anwesenheit von Wasser praktisch kompakt. Ein Trocknen des mineralischen Materials vor Herstellung der Mischung ist daher nicht zwingend erforderlich.

Beim Aufbringen der Mischung zur Herstellung von Deckschichten auf das Untergrundmaterial ist es nicht erforderlich, dass das Untergrundmaterial trocken vorliegt. Überraschenderweise gelingt es auch bei Vorliegen von nassem Untergrundmaterial, eine gute Haftung zwischen der Deckschicht und dem Untergrundmaterial zu erhalten. Dabei wird als Untergrundmaterial, die sog. Trag- bzw. Binderschicht, vorzugsweise ein Material eingesetzt, wie es auch im bituminösen Straßenbau verwendet wird.

Zur Herstellung des Untergrundmaterials wird erfindungsgemäß eine Mischung, enthaltend eine erfindungsgemäßen Polyurethanreaktionsmischung und mineralischem Material, eingesetzt. Als mineralisches Material wird dabei das üblicherweise für die Herstellung des Untergrundmaterials eingesetzte mineralische Material verwendet. Die Korngrößenverteilung des mineralischen Materials zur Herstellung des Untergrundmaterials entspricht dabei der Korngrößenverteilung des üblicherweise im bituminösen Straßenbau zur Herstellung des Untergrundmaterials eingesetzten mineralischen Materials. Neben mineralischem Material und Polyurethanreaktionsmischung kann die Mischung zur Herstellung von Untergrundmaterial auch weitere Stoffe enthalten, beispielsweise Bitumen oder Stoffe, wie sie zur Herstellung des Untergrundmaterials üblicherweise eingesetzt werden. Die Herstellung der Mischung erfolgt dabei vorzugsweise analog zur Herstellung der Mischung zur Herstellung von Deckschichten.

Diese Mischung zur Herstellung des Untergrundmaterials kann beispielsweise auf loses Schottermaterial aufgetragen werden und wird anschließend vorzugsweise verdichtet und ausgehärtet. Dabei können auch mehrere Schichten von Untergrundmaterial eingesetzt werden, wobei diese sich beispielsweise durch den Anteil an Polyurethanreaktionsmischung und/oder durch die Korngrößenverteilung des mineralischen Materials unterscheiden.

Nach dem Auftragen der Mischung zur Herstellung von Deckschichten kann dieses noch mit Sand abgestreut werden. Gegebenenfalls kann die Mischung vor dem Abstreuen leicht verdichtet werden.

Nach dem Auftragen auf das Untergrundmaterial wird die Mischung zur Herstellung einer Deckschicht verdichtet. Dabei wird vorzugsweise mit einem Anpressdruck größer 5 N/cm² gearbeitet. Besonders bevorzugt wird zum Verdichten eine Walze eingesetzt, die die Mischung zur Herstellung von Deckschichten mit einer statischen Linienlast von 7 kg/cm bis 50 kg/cm, insbesondere von 10 kg/cm bis 40 kg/cm verdichtet. Dabei kann eine solche Walze auch im Vibrationsmodus eingesetzt werden. Überraschenderweise zeigen insbesondere hoch verdichtete Deckschichten eine geringe Anfälligkeit des Polyurethans gegenüber Hydrolyse und Frost-Tau-Zyklen.

Deckschichten für Straßen, Wege und andere Verkehrsflächen werden vorzugsweise mit einer Dicke von größer 0,5 cm aufgetragen. Vereinzelt, beispielsweise bei Landebahnen, sind Auftragungsdicken bis einem Meter möglich. Besonders bevorzugt beträgt die Dicke der Deckschichten 1 bis 10 cm, insbesondere 2 bis 6 cm. Dabei beträgt der Gewichtsanteil der Polyurethanreaktionsmischung und gegebenenfalls zugegebener Additive vorzugsweise 1 bis 20 Gew.-%, besonders bevorzugt 2 bis 15 Gew.-% und insbesondere 5 bis 10 Gew.-%, bezogen auf das Gesamtgewicht der Mischung zur Herstellung von Deckschichten.

Der Verbund zwischen mineralischem Material und Bindemittel ist sehr fest. Weiterhin kommt es, insbesondere bei Einsatz von hydroxyfunktionellen Verbindungen mit hydrophoben Gruppen, zu praktisch keinem hydrolytischen Abbau der Polyurethane und somit zu einer sehr langen Haltbarkeit der nach dem erfindungsgemäßen Verfahren hergestellten Deckschichten. Deckschichten sind besonders tragfähig und damit für alle Straßen, Wege und Verkehrsflächen geeignet, besonders für Landebahnen und stärker belastete Straßen der Bauklasse V bis I, insbesondere III bis I und Landebahnen, wobei es sich bei Straßen der Bauklasse V um Anliegerstraßen, bei Straßen der Bauklasse I um Autobahnen und Schnellstraßen handelt. Dabei werden als mineralisches Material vorzugsweise die für die jeweilige Bauklasse empfohlenen Materialien eingesetzt.

Ein weiterer Vorteil der erfindungsgemäß hergestellten Deckschichten ist deren gute Umweltverträglichkeit. So müssen gebrauchte Deckschichten, im Gegensatz zu Deckschichten auf Basis von Bitumen, nicht als Sondermüll entsorgt werden. Auch die energieaufwendige Herstellung entfällt, wodurch im Herstellungsverfahren weniger CO₂ emittiert wird. Besonders bei Einsatz von hydrophoben Reaktionsmischungen kommt es überraschender weise zu geringer Ausbildung von Frostschäden. Ein weiterer Vorteil der erfindungsgemäß hergestellten Deckschichten ist der geringe Reparaturaufwand. So reicht es aus, die Mischung zur Herstellung einer Deckschicht vor Ort in kleinen Mengen ohne Erhitzen herzustellen und auf die beschädigte Stelle aufzutragen und zu verdichten. Darüber hinaus ändern sich die mechanischen Eigenschaften der erfindungsgemäßen Deckschichten über mehrere Jahre nicht. Ein weiterer Vorteil ist erfindungsgemäßer Deckschichten ist eine verbesserte Nassrutschfestigkeit, insbesondere bei Deckschichten mit hohem Polyurethananteil gegenüber Deckschichten mit hohem Bitumenanteil

Im Folgenden wird die Erfindung im Rahmen von Beispielen verdeutlicht:

### Polyurethanreaktionsmischung 1:

100 Gew.-Teile der Polyolkomponente des Systems Elastan 6551/101 und 50 Gew.-Teile IsoPMDI 92140, eine Diphenylmethan-diisocyanat (MDI) enthaltende Zubereitung, wurden miteinander vermischt.

### Probe 1

10 Gew.-Teile der Polyurethanreaktionsmischung 1 werden mit 100 Gew.-Teilen eines Mineralgemisches (Korngröße 1/3, Piesberger) in einer Mischeinheit miteinander vermischt, auf eine 100 x 100 x 100 mm Form gegeben und mit 8,5 N/mm² verdichtet.

Die Eigenschaften der hergestellten Probe 1 wurden nach länger als 24 Stunden Lagerung gemäß den DIN EN 12390-3, DIN CEN/TS 12390-9, DIN 18035-5 und D-N EN 12697-22 bestimmt und sind in Tabelle 1 aufgelistet.

Der Rutschwiderstand und die Griffigkeit wurden von einem externen Prüfinstitut als positiv bewertet.

**Tabelle 1**

| | Probe 1 |
|---|---|
| Druckfestigkeit (N/mm²) | > 11 |
| Abwitterung (g/m²) | < 30 |
| Wasserschluckwert (m/s) | 0,3 |
| Verformungswiderstand (mm) | < 1 |

Tabelle 1 zeigt, dass die hergestellte Probe 1 eine hohe Beständigkeit insbesondere gegen Abwitterung und Verformung (Spurrrillenbildung) aufweist und somit als Deckschichtenmaterial verwendet werden kann.

## Patentansprüche

1. Verfahren zur Herstellung von Deckschichten für Straßen, Wege und andere Verkehrsflächen, bei dem man eine Mischung, enthaltend mineralisches Material und eine Polyurethanreaktionsmischung sowie gegebenenfalls weitere Additive, herstellt, auf ein Untergrundmaterial aufbringt, mit einem Anpressdruck von mindestens 5 N/cm² verdichtet und aushärtet, wobei im wesentlichen ohne Einsatz von Lösemitteln gearbeitet wird, das Untergrundmaterial eine Trag- oder Binderschicht oder eine Mischung, enthaltend die Polyurethanreaktionsmischung und mineralisches Material, ist und die Polyurethanreaktionsmischung erhältlich ist durch Vermischen von
a) Isocyanaten mit
b) Verbindungen mit mindestens zwei gegenüber Isocyanat reaktiven Wasserstoffatomen, die eine hydroxyfunktionelle Verbindung mit hydrophoben Gruppen enthalten, sowie gegebenenfalls
c) Kettenverlängerungsmitteln und/oder Vernetzungsmitteln,
d) Katalysatoren und
e) sonstigen Zusatzstoffen.

2. Verfahren nach Anspruch 1, **dadurch gekennzeichnet, dass** das Untergrundmaterial erhältlich ist durch Auftragen und Aushärten einer Mischung aus mineralischem Material und einer Polyurethanreaktionsmischung.

3. Verfahren nach Anspruch 1 oder 2, **dadurch gekennzeichnet, dass** als Isocyanate a) aromatische Isocyanate eingesetzt werden.

4. Verfahren nach einem der Ansprüche 1 bis 3, **dadurch gekennzeichnet, dass** als Isocyanate a) aliphatische Isocyanate oder Mischungen aus aliphatischen und aromatischen Isocyanaten eingesetzt werden.

5. Verfahren nach einem der Ansprüche 1 bis 4, **dadurch gekennzeichnet, dass** die hydroxyfunktionelle Verbindung mit hydrophoben Gruppen eine hydroxyfunktionelle fettchemische Verbindung enthält.

6. Verfahren nach einem der Ansprüche 1 bis 5, **dadurch gekennzeichnet, dass** die Verbindung mit mindestens zwei gegenüber Isocyanat reaktiven Wasserstoffatomen b) eine hydroxyfunktionelle fettchemische Verbindung und ein mit Phenol modifiziertes aromatisches Kohlenwasserstoffharz enthält.

7. Verfahren nach einem der Ansprüche 1 bis 6, **dadurch gekennzeichnet, dass** die mittlere Funktionalität der Verbindung mit mindestens zwei gegenüber Isocyanat reaktiven Wasserstoffatomen b) größer als 2 ist.

8. Verfahren nach einem der Ansprüche 1 bis 7, **dadurch gekennzeichnet, dass** der Anteil der Polyurethanreaktionsmischung an der Deckschicht 1 bis 20 Gew.-%, bezogen auf das Gesamtgewicht der Mischung zur Herstellung von Deckschichten, beträgt.

9. Verfahren nach einem der Ansprüche 1 bis 8, **dadurch gekennzeichnet, dass** die Deckschicht eine Deckschicht für Straßen der Bauklasse V bis I ist.

10. Verfahren nach einem der Ansprüche 1 bis 9, **dadurch gekennzeichnet, dass** die Polyurethanreaktionsmischung zu einem Polyurethan mit einer Dichte von größer 0,8 g/cm³ ausreagiert.

11. Verfahren nach einem der Ansprüche 1 bis 10, **dadurch gekennzeichnet, dass** das mineralische Material überwiegend gebrochenes Material enthält.

12. Verfahren nach einem der Ansprüche 1 bis 11, **dadurch gekennzeichnet, dass** die Mischung zur Herstellung der Deckschicht Additive enthält.

13. Verfahren Anspruch 12, **dadurch gekennzeichnet, dass** die Mischung zur Herstellung der Deckschicht Fasern als Additive enthält.

14. Verfahren nach einem der Ansprüche 1 bis 13, **dadurch gekennzeichnet, dass** die Dicke der Deckschicht 0,5 bis 15 cm beträgt.

## Claims

1. A process for the production of top layers for roads, tracks, and other areas used by traffic, by producing a mixture comprising mineral material and a polyurethane reaction mixture, and also optionally further additions, applying it to a substrate material, and compacting and hardening it by applying a pressure of at least 5 N/cm², where operations are substantially carried out without use of solvents, the substrate material is an underlayer or binder layer or a mixture comprising the polyurethane reaction mixture and mineral material, and the polyurethane reaction mixture is obtainable by mixing of
a) isocyanates with
b) compounds having at least two hydrogen atoms reactive toward isocyanate, which comprise a hydroxy-functional compound having hydrophobic groups, and also optionally
c) chain extenders and/or crosslinking agents,
d) catalysts, and
e) other additives.

2. The process according to claim 1, wherein the substrate material is obtainable by application and hardening of a mixture composed of mineral material and of a polyurethane reaction mixture.

3. The process according to claim 1 or 2, wherein aromatic isocyanates are used as isocyanates a).

4. The process according to any of claims 1 to 3, wherein aliphatic isocyanates or a mixture composed of aliphatic and aromatic isocyanates is/are used as isocyanates a).

5. The process according to any of claims 1 to 4, wherein the hydroxy-functional compound having hydrophobic groups comprises a hydroxy-functional compound known in oleochemistry.

6. The process according to any of claims 1 to 5, wherein the compound b) having at least two hydrogen atoms reactive toward isocyanate comprises a hydroxy-functional compound known in oleochemistry and a phenol-modified aromatic hydrocarbon resin.

7. The process according to any of claims 1 to 6, wherein the average functionality of the compound b) having at least two hydrogen atoms reactive toward isocyanate is greater than 2.

8. The process according to any of claims 1 to 7, wherein the proportion of the polyurethane reaction mixture in the top layer is from 1 to 20% by weight, based on the total weight of the mixture for the production of top layers.

9. The process according to any of claims 1 to 8, wherein the top layer is a top layer for roads of construction class V to I.

10. The process according to any of claims 1 to 9, wherein the polyurethane reaction mixture completes its reaction to form a polyurethane with density greater than 0.8 g/cm³.

11. The process according to any of claims 1 to 10, wherein the mineral material mainly comprises broken material.

12. The process according to any of claims 1 to 11, wherein the mixture for the production of the top layer comprises additions.

13. The process according to claim 12, wherein the mixture for the production of the top layer comprises fibers as additions.

14. The process according to any of claims 1 to 13, wherein the thickness of the top layer is from 0.5 to 15 cm.

## Revendications

1. Procédé pour la fabrication de couches de recouvrement pour des routes, des rues et d'autres surfaces de circulation, dans lequel on prépare un mélange, contenant une matière minérale et un mélange réactif de polyuréthane ainsi que le cas échéant d'autres additifs, on l'applique sur un matériau de sous-couche, on le compacte et le durcit à une pression de compression d'au moins 5 N/cm², en travaillant essentiellement sans utiliser de solvants, le matériau de sous-couche étant une couche support ou une couche de liant ou un mélange contenant le mélange réactif de polyuréthane et la matière minérale et le mélange réactif de polyuréthane pouvant être obtenu par mélange
a) d'isocyanates avec
b) des composés présentant au moins deux atomes d'hydrogène réactifs par rapport à isocyanate qui contiennent un composé à fonctionnalité hydroxy présentant des groupes hydrophobes ainsi que le cas échéant
c) des agents d'allongement de chaîne et/ou des réticulants,
d) des catalyseurs et
e) d'autres adjuvants.

2. Procédé selon la revendication 1, **caractérisé en ce que** le matériau de substrat peut être obtenu par application et durcissement d'un mélange de matière minérale et d'un mélange réactif de polyuréthane.

3. Procédé selon la revendication 1 ou 2, **caractérisé en ce qu'**on utilise, comme isocyanates a), des isocyanates aromatiques.

4. Procédé selon l'une quelconque des revendications 1 à 3, **caractérisé en ce qu'**on utilise, comme isocyanates a), des isocyanates aliphatiques ou des mélanges de diisocyanates aliphatiques et aromatiques.

5. Procédé selon l'une quelconque des revendications 1 à 4, **caractérisé en ce que** le composé à fonctionnalité hydroxy présentant des groupes hydrophobes contient un composé chimique gras à fonctionnalité hydroxy.

6. Procédé selon l'une quelconque des revendications 1 à 5, **caractérisé en ce que** le composé b) présentant au moins deux atomes d'hydrogène réactif par rapport à isocyanate contient un composé chimique gras à fonctionnalité hydroxy et une résine hydrocarbonée aromatique modifiée par phénol.

7. Procédé selon l'une quelconque des revendications 1 à 6, **caractérisé en ce que** la fonctionnalité moyenne du composé b) présentant au moins deux atomes d'hydrogène réactif par rapport à isocyanate est supérieure à 2.

8. Procédé selon l'une quelconque des revendications 1 à 7, **caractérisé en ce que** la proportion de mélange réactif de polyuréthane par rapport à la couche de recouvrement représente 1 à 20% en poids, par rapport au poids total du mélange pour la fabrication de couches de recouvrement.

9. Procédé selon l'une quelconque des revendications 1 à 8, **caractérisé en ce que** la couche de recouvrement est une couche de recouvrement pour des rues de la classe de construction V à I.

10. Procédé selon l'une quelconque des revendications 1 à 9, **caractérisé en ce que** le mélange réactif de polyuréthane réagit en un polyuréthane présentant une densité supérieure à 0,8 g/cm³.

11. Procédé selon l'une quelconque des revendications 1 à 10, **caractérisé en ce que** la matière minérale contient principalement de la matière concassée.

12. Procédé selon l'une quelconque des revendications 1 à 11, **caractérisé en ce que** le mélange pour la fabrication de la couche de recouvrement contient des additifs.

13. Procédé selon la revendication 12, **caractérisé en ce que** le mélange pour la fabrication de la couche de recouvrement contient des fibres comme additifs.

14. Procédé selon l'une quelconque des revendications 1 à 13, **caractérisé en ce que** l'épaisseur de la couche de recouvrement est de 0,5 à 15 cm.
